# EUROPÄISCHE PATENTSCHRIFT

(11) **EP 3 230 697 B1**
(45) Veröffentlichungstag und Bekanntmachung des Hinweises auf die Patenterteilung: **23.09.2020**
(21) Anmeldenummer: 15775211.4
(22) Anmeldetag: 06.10.2015
(51) Int. Cl.: G01F 1/692, G01F 1/68

(54) **SENSOR ZUR BESTIMMUNG WENIGSTENS EINES PARAMETERS EINES DURCH EINEN MESSKANAL STRÖMENDEN FLUIDEN MEDIUMS**
SENSOR FOR DETERMINING AT LEAST ONE PARAMETER OF A FLUID MEDIUM FLOWING THROUGH A MEASUREMENT CHANNEL
DÉTECTEUR POUR DÉTERMINER AU MOINS UN PARAMÈTRE D'UN MILIEU FLUIDE S'ÉCOULANT DANS UN CONDUIT DE MESURE

(30) Priorität: 09.12.2014 DE 102014225303
(43) Veröffentlichungstag der Anmeldung: 18.10.2017
(73) Patentinhaber: Robert Bosch GmbH, 70442 Stuttgart (DE)
(72) Erfinder: HUEFTLE, Gerhard, 71546 Aspach (DE); UNGER, Holger, 71686 Remseck (DE); SOMMER, Edda, 70563 Stuttgart (DE); BRIESE, Achim, 71277 Rutesheim (DE); SCHWARTZKOPFF, Thomas, 71254 Ditzingen (DE); HAAG, Axel-Werner, 70563 Stuttgart (DE); STEUBER, Frank, 70806 Kornwestheim (DE); KONZELMANN, Uwe, 71679 Asperg (DE); RITTMANN, Michael, 71254 Ditzingen (DE); EPPLER, Michael, 73760 Ostfildern (DE); HERRMANN, Reinhold, 70469 Stuttgart (DE); MARKOV, Alexander, 70469 Stuttgart (DE); BODENBERGER, Bastian, 70597 Stuttgart (DE); BEYRICH, Hans, 71691 Freiberg/N (DE)
(86) Internationale Anmeldenummer: PCT/EP2015/073045
(87) Internationale Veröffentlichungsnummer: WO 2016/091416

(56) Entgegenhaltungen:
- CN-A- 1 262 735
- DE-A1- 19 847 303
- US-A- 5 631 416
- US-A1- 2013 269 419
- US-A1- 2014 224 004

## Beschreibung

### Stand der Technik

Aus dem Stand der Technik sind zahlreiche Verfahren und Vorrichtungen zur Bestimmung einer Strömungseigenschaft fluider Medien, also von Flüssigkeiten und/oder Gasen, bekannt. Bei den Strömungseigenschaften kann es sich dabei um grundsätzlich beliebige physikalisch und/oder chemisch messbare Eigenschaften handeln, welche eine Strömung des fluiden Mediums qualifizieren oder quantifizieren. Insbesondere kann es sich dabei um eine Strömungsgeschwindigkeit und/oder einen Massenstrom und/oder einen Volumenstrom handeln.

Die Erfindung wird im Folgenden insbesondere beschrieben unter Bezugnahme auf so genannte Heißfilmluftmassenmesser, wie sie beispielsweise in Konrad Reif (Hrsg.): Sensoren im Kraftfahrzeug, 1. Auflage 2010, Seiten 146-148 beschrieben sind. Derartige Heißfilmluftmassenmesser basieren in der Regel auf einem Sensorchip, insbesondere einem Siliziumsensorchip, mit einer Sensormembran als Messoberfläche oder Sensorbereich, welche von dem strömenden fluiden Medium überströmbar ist. Der Sensorchip umfasst in der Regel mindestens ein Heizelement sowie mindestens zwei Temperaturfühler, welche beispielsweise auf der Messoberfläche des Sensorchips angeordnet sind. Aus einer Asymmetrie des von den Temperaturfühlern erfassten Temperaturprofils, welches durch die Strömung des fluiden Mediums beeinflusst wird, kann auf einen Massenstrom und/oder Volumenstrom des fluiden Mediums geschlossen werden. Heißfilmluftmassenmesser sind üblicherweise als Steckfühler ausgestaltet, welcher fest oder austauschbar in ein Strömungsrohr einbringbar ist. Beispielsweise kann es sich bei diesem Strömungsrohr um einen Ansaugtrakt einer Brennkraftmaschine handeln.

Dabei durchströmt ein Teilstrom des Mediums wenigstens einen in dem Heißfilmluftmassenmesser vorgesehenen Hauptkanal. Zwischen dem Einlass und dem Auslass des Hauptkanals ist ein Bypasskanal ausgebildet. Insbesondere ist der Bypasskanal derart ausgebildet, dass er einen gekrümmten Abschnitt zur Umlenkung des durch den Einlass des Hauptkanals eingetretenen Teilstroms des Mediums aufweist, wobei der gekrümmte Abschnitt im weiteren Verlauf in einen Abschnitt übergeht, in welchem der Sensorchip angeordnet ist. Der zuletzt genannte Abschnitt stellt den eigentlichen Messkanal dar, in dem der Sensorchip angeordnet ist. Dabei ist in dem Bypasskanal ein Mittel vorgesehen, welches die Strömung leitet und einer Ablösung der Strömung des Medienteilstroms von den Kanalwänden des Messkanals entgegenwirkt. Weiterhin ist der Einlassbereich des Hauptkanals im Bereich seiner Öffnung, welche der Hauptströmungsrichtung entgegenweist, mit schrägen oder gekrümmten Flächen versehen, welche so gestaltet sind, dass in den Einlassbereich einströmendes Medium von dem Teil des Hauptkanals, welcher zu dem Sensorchip führt, weggelenkt wird. Dies bewirkt, dass im Medium enthaltene Flüssigkeits- oder Festkörperteilchen aufgrund ihrer Massenträgheit nicht zu dem Sensorchip gelangen und diesen verschmutzen können.

Im Normalbetrieb gelangt Luft vom Steckfühlereinlass über die Fliehkraftumlenkung zum Sensorträger. Aufgrund der Fliehkraftumlenkung gelangen nur die leichteren Partikel, wie beispielsweise Wasser- und Öltröpfchen sowie Staub- und Rußpartikel, in den Bypasskanal. Schwere Partikel verlassen aufgrund ihrer Massenträgheit den Steckfühler mit dem Großteil des Massenstromes durch den Hauptstromkanal oder prallen gegen die umgebenden Wände. Bei den im Stand der Technik bekannten Luftmassenmessern wird mit Dünndrahtbonds die elektrisch leitende Verbindung der Bondpads auf dem Elektronikmodul mit den einzelnen Pins des Leiterkamms hergestellt. Eine Kontamination des Sensorchips und insbesondere der mikromechanischen Sensormembran, beispielsweise mit anhaftenden Staubpartikeln, führt zu einer Veränderung des Wärmehaushaltes und damit zu Kennlinienabweichungen. Ablagerungen auf dem Sensorchip oder dem Sensorträger stromauf der mikromechanischen Sensormembran können außerdem zu einer messtechnisch relevanten Aufdickung der Strömungsgrenzschicht führen. Auch in diesem Fall können sich Kennlinienabweichungen ergeben. Die Kontaminationsvermeidung oder -reduzierung ist damit eine Maßnahme zur Erreichung möglichst geringer Kennliniendriften über die Einsatzdauer hinweg.

Da der Wärmeübergang im Bereich der Sensormembran entscheidend sowohl von der Grenzschichtströmung auf CMF-Seite des Sensorträgers als auch in gewissem Umfang von der wandferneren Strömung (im Sinne der strömungsmechanischen Definition einer Grenzschicht) sowohl auf der CMF-Seite als auch auf der CMF-abgewandten Seite und überdies von der Nachlaufströmung des Sensorträgers bestimmt wird, müssen diese Strömungsbereiche topologisch bzw. qualitativ und quantitativ so stabil wie möglich sein. Unter einer veränderten Topologie versteht man dabei eine Veränderung der die Strömung definierenden Struktur mit ausgezeichneten Punkten wie z. B. Staupunkten, Wirbelfoki, Ablöselinien etc. Eine quantitative Änderung der Strömungsgrößen, insbesondere der Schwankung von Geschwindigkeit und Druck auch ohne Änderung der Topologie soll daher ebenfalls vermieden bzw. reduziert werden. Der Massenstrom durch den Bypasskanal teilt sich also beim Passieren des Sensorträgers auf die CMFzugewandte und die CMF-abgewandte Seite sowie durch den Spalt zwischen der Stirnseite des Sensorträgers und der Bypasskanalwand auf. Allerdings sind dem Bestreben eines exakten Zuschnitts der Strömungstopologie sowie der Begrenzung von Schwankungen, insbesondere des messtechnisch relevanten Einzugsgebietes stromauf der mikromechanischen Sensoranordnung, Grenzen gesetzt. Eine Kontaminationsreduzierung, insbesondere im Nahbereich und insbesondere für den Fall der Kontamination mit verhältnismäßig leichten, der Strömung sehr gut folgenden Staubpartikeln wäre daher wünschenswert. Die Kontamination der mikromechanischen Sensormembran, des Sensorchips und des Sensorträgers ist stark abhängig von den geometrischen und elektrostatischen Verhältnissen in diesem Bereich.

Bei bekannten, beispielhaft realisierten Geometrie eines Bypasskanaldeckels für einen Luftmassenmesser sind Bypasskanaldeckel, Gerätegehäuse, Elektronikraumdeckel und Sensorträger miteinander verklebt. Das strömungsführende Kanalsystem erstreckt sich vom Bypasskanaleinlass über einen ersten Strompfad bis zum Bypasskanalauslass. In diesem Pfad befindet sich das mikromechanische Messelement. Ausreichend leichte Partikel können diesem Pfad folgen. Genügend schwere Partikel verlassen den Steckfühler rückseitig durch den Hauptstromkanalauslass. Unter anderem gestalten die "Großbauteile" Bypasskanaldeckel, Gerätegehäuse und Elektronikraumdeckel den Nahbereich des mikromechanischen Messelementes.

Insbesondere im Bereich des Sensorträgers muss ein toleranzarmer Setz- und Klebeprozess mit Abdichtung des Bypasskanals gewährleistet werden. Andernfalls würden Partikel oder Tröpfchen unter Umgehung der Fliehkraftumlenkung auch aus der Steckfühleraußenströmung durch undichte Klebungen in den unter niedrigem statischen Druck stehenden Bypasskanal im Bereich des Sensorträgers und damit zum mikromechanischen Messelement gelangen. Solch eine Kontamination kann unter anderem zu Kennliniendriften führen. Die Bauteilreihenfolge des Setz- und Klebeprozesses ist dabei üblicherweise wie folgt. Nach dem Einsetzen des Elektronikmoduls in den Elektronikraum des Sensorgehäuses wird mit dem Setzen des Bypasskanaldeckels eine Klebenut für die "Feder" bzw. das "Klebeschwert", also eine schmale, umlaufende Seitenwand des Elektronikmoduldeckels, gebildet. Der Elektronikmoduldeckel wird also zuletzt auf Sensorgehäuse und Bypasskanaldeckel gesetzt.

Bei einer weiteren bekannten Geometrie des Bypasskanaldeckels sowie des Sensorrägers gelangt der Großteil des in den Steckfühler eintretenden Massenstromes vom Bypasskanaleinlass über den Hauptstromkanalauslass wieder aus dem Steckfühler heraus. Ein kleiner Teil des Massenstromes gelangt über den Bereich der Fliehkraftumlenkung und der Gegenkontur mit Abrisskante zum Sensorträger mit dem mikromechanischen Messelement. Schließlich tritt der Bypassmassenstrom über den Bypasskanalauslass aus dem Steckfühler heraus. Im Bereich des Sensorträgers existiert sowohl ein Nut-Feder-System zur Verklebung von Bypasskanaldeckel und Gerätegehäuse als auch rückseitig ein Nut-Feder-System zur Verklebung von Elektronikmoduldeckel und Bypasskanaldeckel. Die Verfüllung der Nuten im Gerätegehäuse kann mit Klebstoff an dem sogenannten Klebeschwert des Elektronikmoduldeckels erfolgen.

Charakterisierend für die Verzweigung des Massenstroms ist der Staupunkt auf der Wand gegenüber der Fliehkraftumlenkung. Staubpartikel können mit dem Bypasskanalmassenstrom zur mikromechanischen Sensormembran gelangen. Im Nahbereich des Sensorträgers existiert ein strahlförmiger Bereich hoher Geschwindigkeit. Leichte Partikel können allerdings über Rezirkulationsgebiete die gesamte Sensorträger- bzw. Bypasskanalbreite erreichen. Eine Kontamination des mikromechanischen Messelementes ist daher im gesamten Massenstrombereich möglich.

Im Nahbereich des mikromechanischen Messelementes ist nach aktuellen Erkenntnissen die Ausbildung elektrischer Felder insbesondere bedeutsam für die Anlagerung von Partikeln auf der mikromechanischen Sensormembran und dem Sensorchip. Die dort herrschenden Potentiale können hierbei qualitativ als negative bzw. positive Potentiale formuliert werden. Eine elektrostatische Aufladung und Erreichung solcher Potentiale kann sich beispielsweise durch Reibung oder geladene Teilchen direkt an den dargestellten Bauteilen oder indirekt über die Feldwirkung umgebender Bauteile, z. B. Strömungsrohr, Luftfilterwände, einstellen.

Geladene Teilchen werden in elektrischen Feldern von gegensätzlichen Ladungen bzw. Potentialen angezogen und von gleichen Ladungen bzw. Potentialen abgestoßen. Ohne Anfangsgeschwindigkeit in einem elektrischen Feld freigesetzte Partikel bewegen sich dabei auf dem Pfad der stärksten Gradienten. Ein positiv geladenes Teilchen würde sich also in einem spezifischen Strömungsraum unter Berücksichtigung der zusätzlich vorhandenen Trägheitskräfte in der Nähe des Sensorträgers entlang des stärksten Gradienten des elektrischen Feldes zum negativen Potential, also zum Sensorchip und der mikromechanischen Sensormembran bewegen. Staubpartikel können sich auf diese Weise insbesondere auf dem Sensorchhip und der mikromechanischen Sensormembran absetzen und unter anderem zu einer Kennliniendrift führen. Aufgrund der speziellen geometrischen Bypassauslegung ist nur ein sehr kleiner Teil der Partikelgesamtheit an der möglichen Verschmutzung beteiligt. Über die Lebensdauer kumulieren sich jedoch diese beispielsweise elektrostatisch bedingten Anhaftungen von Partikeln und führen zu der beschriebenen Kennlinienabweichung.

Aus der US 5 631 416 A1 ist ein Sensor zur Bestimmung des Durchflusses eines durch einen Messkanal strömenden Ansaugluftmassenstrom einer Brennkraftmaschine bekannt, wobei der Sensor ein Sensorgehäuse, einen in ein Strömungsrohr eingebrachten oder einbringbaren Steckfühler, in dem der Messkanal ausgebildet ist, und einen in dem Messkanal angeordneten Sensorchip zur Bestimmung des Durchflusses des Ansaugluftmassenstroms aufweist, wobei das Sensorgehäuse einen Elektronikraum zur Aufnahme eines Elektronikmoduls, einen Elektronikraumdeckel zum Verschließen des Elektronikraums und einen Messkanaldeckel aufweist, wobei der Elektronikraumdeckel elektrisch leitfähige Eigenschaften aufweist und mit einem festen Potential elektrisch verbunden ist.

### Offenbarung der Erfindung

Es wird daher ein Sensor zur Bestimmung wenigstens eines Parameters eines durch einen Messkanal strömenden fluiden Mediums vorgeschlagen, welcher die Nachteile bekannter Sensoren zumindest weitgehend vermeiden kann und der insbesondere eine Reduzierung bzw. eine Vermeidung einer Staubkontamination der mikromechanischen Sensormembran, des Sensorchips und des Sensorträgers und somit eine Reduzierung von Kennliniendriften, insbesondere über die Lebensdauer, insbesondere durch eine Ablagerung von Staubpartikeln an der Oberfläche der genannten Bauteile, ermöglicht, eine verbesserte elektromagnetische Verträglichkeit, also eine verringerte Empfindlichkeit der elektrischen und elektronischen Signalverarbeitung gegen eingestrahlte elektromagnetische Störungen, erlaubt und einen verbesserten Schutz gegen elektrostatische Entladungen in die Schaltung durch kontrollierte Ableitung der Ladung erlaubt.

Der Sensor zur Bestimmung wenigstens eines Parameters eines durch einen Messkanal strömenden fluiden Mediums, insbesondere eines Ansaugluftmassenstroms einer Brennkraftmaschine, weist ein Sensorgehäuse, insbesondere einen in ein Strömungsrohr eingebrachten oder einbringbaren Steckfühler, in dem der Messkanal ausgebildet ist, und mindestens einen in dem Messkanal angeordneten Sensorchip zur Bestimmung des Parameters des fluiden Mediums auf. Das Sensorgehäuse weist einen Elektronikraum zur Aufnahme eines Elektronikmoduls und einen Elektronikraumdeckel zum Verschließen des Elektronikraums auf. Der Elektronikraumdeckel weist zumindest teilweise elektrisch leitfähige Eigenschaften auf und ist mit einem festen Potential elektrisch verbunden ist. Das feste Potential ist bevorzugt die Sensormasse. Erfindungsgemäß ist der Elektronikraumdeckel in einem verschlossenen Zustand teilweise auf dem Messkanaldeckel angebracht ist und der Elektronikraumdeckel so ausgebildet ist, dass der Elektronikraumdeckel in einem verschlossenen Zustand den Sensorchip überdeckt. Mit anderen Worten überlappen in einem verschlossenen Zustand der Elektronikraumdeckel und der Sensorchip bei einer Betrachtung senkrecht zu dem Elektronikraumdeckel oder dem Sensorchip.

Unter elektrisch leitfähigen Eigenschaften des Elektronikraumdeckels ist im Rahmen der vorliegenden Erfindung zu verstehen, dass der Elektronikraumdeckel zum Leiten elektrischer Ladungen ausgebildet ist. Dies kann dadurch realisiert sein, dass an oder in dem Elektronikraumdeckel elektrische leitfähige Bauteile, wie beispielsweise elektrische Leitungen angeordnet sind. Bevorzugt wird die elektrische Leitfähigkeit durch das Material des Elektronikraumdeckels realisiert. Beispielsweise ist der Elektronikraumdeckel zumindest teilweise aus mindestens einem elektrisch leitfähigen Material hergestellt. Dies bedeutet, dass der Elektronikraumdeckel aus einem einzigen Material oder aus mehreren Materialien, die sich unterscheiden können, hergestellt sein kann. Beispielsweise ist der Elektronikraumdeckel aus Metall hergestellt. Alternativ sind verschiedene Materialien für den Elektronikraumdeckel denkbar. Beispielsweise kann der Elektronikraumdeckel aus Einkomponenten- oder Zweikomponentenmaterialien hergestellt sein. Dadurch lässt sich der Elektronikraumdeckel mittels eines Spritzgussverfahrens herstellen. Das Spritzgussverfahren kann dabei so ausgelegt werden, dass in unterschiedlichen Bereichen des Elektronikraumdeckels unterschiedliche Materialien bzw. Komponenten, also beispielsweise leitfähige und nicht leitfähige Komponenten, vorhanden sein können. Insbesondere können Faser-Matrix-, Kugel-Matrix-Verbunde oder andere Faserverbundstoffe im Einkomponenten- oder Zweikomponentenverfahren gespritzt werden. Die Leitfähigkeit des Elektronikraumdeckels lässt sich in ausreichender Form beispielsweise mittels eines Kunststoffspritzgussverfahrens realisieren, bei dem 15 % Kohlenstofffaseranteile verwendet werden.

Das Sensorgehäuse kann einen Gehäusekörper aufweisen. Der Gehäusekörper kann mindestens eine Gehäusekörperbohrung aufweisen. Der Messkanaldeckel kann mindestens eine Messkanaldeckelbohrung aufweisen. Der Elektronikraumdeckel kann mindestens einen Zapfen aufweisen. In einem verschlossenen Zustand kann der Zapfen in die Messkanaldeckelbohrung und die Gehäusekörperbohrung greifen. In einer bevorzugten Ausführungsform kann der Elektronikraumdeckel mittels des Zapfens mit dem festen elektrischen Potential elektrisch verbunden sein. Alternativ kann das Elektronikmodul eine Leiterplatte aufweisen. Die Leiterplatte kann mindestens einen Stift aufweisen. Der Elektronikraumdeckel kann mittels des Stifts mit dem festen elektrischen Potential elektrisch verbunden sein. Alternativ kann die Leiterplatte einen Pin aufweisen. Der Elektronikraumdeckel kann mittels des Pins mit dem festen elektrischen Potential elektrisch verbunden sein.

Unter der Hauptströmungsrichtung ist im Rahmen der vorliegenden Erfindung die lokale Strömungsrichtung des fluiden Mediums am Ort des Sensors bzw. der Sensoranordnung zu verstehen, wobei beispielsweise lokale Unregelmäßigkeiten, wie zum Beispiel Turbulenzen, unberücksichtigt bleiben können. Insbesondere kann unter der Hauptströmungsrichtung somit die lokale gemittelte Transportrichtung des strömenden fluiden Mediums verstanden werden. Die Hauptströmungsrichtung kann daher einerseits auf die Strömungsrichtung am Ort der Sensoranordnung selbst bezogen sein oder auch auf die Strömungsrichtung in dem Kanal innerhalb des Sensorgehäuses, wie beispielsweise am Ort des Sensorträgers oder des Sensorchips, wobei sich beide genannten Hauptströmungsrichtungen unterscheiden können. Im Rahmen der vorliegenden Erfindung wird deshalb stets angegeben, auf welchen Ort sich die Hauptströmungsrichtung bezieht. Sofern keine nähere Angabe gemacht ist, bezieht sich die Hauptströmungsrichtung auf den Ort der Sensoranordnung.

Unter einer stromabwärtigen Anordnung ist im Rahmen der vorliegenden Erfindung die Anordnung eines Bauteils an einer Stelle zu verstehen, die das fluide Medium in der Hauptströmungsrichtung strömend zeitlich später als einen Bezugspunkt erreicht.

Analog ist im Rahmen der vorliegenden Erfindung unter einer stromaufwärtigen Anordnung eines Bauteils eine Anordnung des Bauteils an einer Stelle zu verstehen, die das in der Hauptströmungsrichtung strömende fluide Medium zeitlich gesehen früher als einen Bezugspunkt erreicht.

Im Rahmen der vorliegenden Erfindung kann der Sensorträger ganz oder teilweise als Schaltungsträger, insbesondere als Leiterplatte, ausgestaltet sein oder Teil eines Schaltungsträgers, insbesondere einer Leiterplatte, sein. Beispielsweise kann der Schaltungsträger, insbesondere die Leiterplatte, einen Fortsatz aufweisen, welcher den Sensorträger bildet und welcher in den Kanal, beispielsweise den Messkanal eines Heißfilmluftmassenmessers, hineinragt. Der übrige Teil des Schaltungsträgers, insbesondere der Leiterplatte, kann beispielsweise in einem Elektronikraum, in einem Gehäuse der Sensoranordnung oder eines Steckfühlers der Sensoranordnung untergebracht sein.

Unter einer Leiterplatte ist dabei im Rahmen der vorliegenden Erfindung allgemein ein im Wesentlichen plattenförmiges Element zu verstehen, welches auch als Träger elektronischer Strukturen, wie beispielsweise Leiterbahnen, Anschlusskontakte oder Ähnliches, genutzt werden kann und vorzugsweise auch eine oder mehrere derartiger Strukturen aufweist. Grundsätzlich kommen dabei auch zumindest leichte Abweichungen von der Plattenform in Betracht und sollen begrifflich mit erfasst sein. Die Leiterplatte kann beispielsweise aus einem Kunststoffmaterial und/oder einem Keramikmaterial hergestellt sein, beispielsweise einem Epoxidharz, insbesondere einem faserverstärkten Epoxidharz. Insbesondere kann die Leiterplatte beispielsweise als Leiterplatte mit Leiterbahnen, insbesondere aufgedruckten Leiterbahnen (printed circuit board, PCB), ausgestaltet sein.

Auf diese Weise lässt sich das Elektronikmodul der Sensoranordnung stark vereinfachen und es lässt sich beispielsweise auf ein Bodenblech und einen separaten Sensorträger verzichten. Bodenblech und Sensorträger können durch eine einzige Leiterplatte ersetzt werden, auf welcher beispielsweise auch eine Ansteuer- und Auswerteschaltung der Sensoranordnung ganz oder teilweise angeordnet sein kann. Diese Ansteuer- und Auswerteschaltung der Sensoranordnung dient der Ansteuerung des mindestens einen Sensorchips und/oder der Auswertung der von diesem Sensorchip generierten Signale. Auf diese Weise lässt sich durch Zusammenfassung der genannten Elemente der Herstellaufwand der Sensoranordnung erheblich vermindern und der Bauraumbedarf für das Elektronikmodul stark verringern.

Die Sensoranordnung kann insbesondere mindestens ein Gehäuse aufweisen, wobei der Kanal in dem Gehäuse ausgebildet ist. Beispielsweise kann der Kanal einen Hauptkanal und einen Bypasskanal bzw. Messkanal umfassen, wobei der Sensorträger und der Sensorchip beispielsweise in dem Bypass- bzw. Messkanal angeordnet sein können. Weiterhin kann das Gehäuse einen von dem Bypasskanal getrennten Elektronikraum aufweisen, wobei das Elektronikmodul oder die Leiterplatte im Wesentlichen in dem Elektronikraum aufgenommen ist. Der Sensorträger kann dann als ein in den Kanal hineinragender Fortsatz der Leiterplatte ausgebildet sein. Diese Anordnung ist technisch vergleichsweise einfach zu realisieren, im Gegensatz zu den aufwändigen Elektronikmodulen, welche aus dem Stand der Technik bekannt sind.

Insbesondere in dem Fall, in welchem eine Leiterplatte als Sensorträger verwendet wird, jedoch auch in anderen Fällen und/oder unter Verwendung anderer Medien als Sensorträger, kann der Sensorträger zumindest teilweise als mehrschichtiger Sensorträger ausgestaltet sein. So kann der Sensorträger in einer so genannten Multilayer-Technik ausgestaltet sein und zwei oder mehrere miteinander verbundene Trägerschichten aufweisen. Beispielsweise können diese Trägerschichten wiederum aus einem Metall, einem Kunststoff oder einem Keramikmaterial oder einem Verbundmaterial hergestellt sein und durch Verbindungstechniken, wie z. B. Kleben, miteinander verbunden sein.

In diesem Fall, in welchem eine Multilayer-Technik verwendet wird mit mehreren Sensorschichten des Sensorträgers, kann die Anströmkante durch eine unterschiedliche Dimensionierung der Trägerschichten entgegen der Hauptströmungsrichtung des fluiden Mediums zumindest teilweise gestuft ausgeführt sein. Auf diese Weise lassen sich die Profile zumindest gestuft angenähert realisieren. Beispielsweise lassen sich auf diese Weise rechteckig geformte oder - angenähert durch eine Stufenform - zumindest näherungsweise rund-, abgerundete oder keilförmig geformte Profile in einer Schnittebene senkrecht zur Erstreckungsebene des Sensorträgers ausbilden. Der Sensorchip kann auf bzw. in dem Sensorträger derart angeordnet sein, dass dieser senkrecht zur lokalen Hauptströmungsrichtung ausgerichtet ist. Beispielsweise kann der Sensorchip rechteckig ausgestaltet sein, wobei eine Seite dieses Rechtecks senkrecht oder im Wesentlichen senkrecht, beispielsweise mit einer Ausrichtung, welche um nicht mehr als 10 Grad von der Senkrechten abweicht, zur lokalen Hauptströmungsrichtung angeordnet ist.

Der Sensorchip kann über mindestens eine elektrische Verbindung elektrisch kontaktiert werden. Beispielsweise kann der Sensorträger, insbesondere eine den Sensorträger bildende Leiterplatte oder ein Fortsatz dieser Leiterplatte, einen oder mehrere Leiterbahnen und/oder Kontaktpads aufweisen, welche mit entsprechenden Kontakten auf dem Sensorchip beispielsweise durch ein Bondingverfahren verbunden sind. In diesem Fall kann die elektrische Verbindung durch mindestens eine Abdeckung geschützt und von dem fluiden Medium getrennt werden. Diese Abdeckung kann insbesondere als so genannter Glob-Top ausgestaltet sein, beispielsweise als Kunststofftropfen und/oder Klebstofftropfen, welcher die elektrische Verbindung, beispielsweise die Bonddrähte abdeckt. Auf diese Weise lassen sich insbesondere auch Beeinflussungen der Strömung durch die elektrische Verbindung vermindern, da der Glob-Top eine glatte Oberfläche aufweist.

Ferner kann der Sensorchip mindestens einen Sensorbereich aufweisen. Dieser Sensorbereich kann beispielsweise eine Sensoroberfläche aus beispielsweise einem porösen, keramischen Material und/oder insbesondere eine Sensormembran sein. Die Sensormembran als Messoberfläche oder Sensorbereich kann von dem strömenden fluiden Medium überströmbar sein. Der Sensorchip umfasst beispielsweise mindestens ein Heizelement sowie mindestens zwei Temperaturfühler, welche beispielsweise auf der Messoberfläche des Sensorchips angeordnet sind, wobei ein Temperaturfühler stromaufwärts des Heizelements und der andere Temperaturfühler stromabwärts des Heizelements gelagert ist. Aus einer Asymmetrie des von den Temperaturfühlern erfassten Temperaturprofils, welches durch die Strömung des fluiden Mediums beeinflusst wird, kann auf einen Massenstrom und/oder Volumenstrom des fluiden Mediums geschlossen werden.

Unter einem Anströmabschnitt des Sensorträgers ist im Rahmen der vorliegenden Erfindung derjenige Abschnitt des Sensorträgers zu verstehen, der sich stromaufwärts des Sensorchips befindet.

Ein Grundgedanke der vorliegenden Erfindung ist das Vorsehen eines elektrisch leitfähigen Elektronikraumdeckels. Damit wird eine Staubkontamination der mikromechanischen Sensormembran, des Sensorchips und des Sensorträgers deutlich reduziert. Insbesondere Kennliniendriften des Sensors über die Lebensdauer können somit reduziert bzw. vermieden werden. Des Weiteren ist ein Grundgedanke der vorliegenden Erfindung die Ausbildung eines geschirmten Raums zwischen dem Bodenblech des Elektronikmoduls und dem Elektronikraumdeckel, wodurch die innerhalb dieses abgeschirmten Raums befindliche Platine mit der Auswerteschaltung gegen Beeinflussung von außen durch Einstrahlung besser geschützt und die resultierende Störfestigkeit erhöht werden kann. Des Weiteren lässt sich dadurch ein alternatives Massepotential außerhalb bzw. oberhalb der Schaltung bzw. des Sensorchips realisieren, was bei elektrostatischen Entladungen mit angeschlossener Verkabelung dazu führt, dass die Entladungen bei Überschreiten der Überschlagsspannung nicht undefiniert in die Schaltung erfolgen, sondern ein Ableiten der Ströme direkt auf das Massepotential des Sensors erfolgt und so die Schaltung umgangen wird. Des Weiteren ist der Sensor aufgrund der geometrischen Umsetzungsmöglichkeiten, der Materialauswahl für den Elektronikraumdeckel und die Art der Kontaktierung kostengünstig mit einem geringen fertigungstechnischen Aufwand herstellbar.

### Kurze Beschreibung der Zeichnungen

Weitere optionale Einzelheiten und Merkmale der Erfindung ergeben sich aus der nachfolgenden Beschreibung bevorzugter Ausführungsbeispiele, welche in den Figuren schematisch dargestellt sind.

### Es zeigen:

- Figur 1: eine perspektivische Ansicht eines Sensors,
- Figur 2: eine vergrößerte Ansicht eines Elektronikmoduls des Sensors,
- Figur 3: eine Draufsicht auf eine weitere mögliche Ausführungsform des Sensors,
- Figur 4: eine Draufsicht auf den Messkanaldeckel,
- Figur 5: eine vergrößerte Ansicht des Gehäusekörpers im Bereich des Messkanaldeckels mit montiertem Elektronikraumdeckel sowie Sensorträger mit mikromechanischem Sensorchip,
- Figur 6: eine vergrößerte Ansicht einer Rückseite des Messkanaldeckels,
- Figur 7: eine vergrößerte perspektivische Ansicht des Gehäusekörpers,
- Figur 8: eine Darstellung von möglichen Strömungsbedingungen in der Kanalstruktur,
- Figur 9: eine Verteilung von elektrischen Potentialen des Sensors,
- Figur 10: eine Verteilung von elektrischen Potentialen des Sensors,
- Figur 11: eine perspektivische Ansicht eines Sensors gemäß einer ersten Ausführungsform der vorliegenden Erfindung,
- Figur 12: eine Darstellung der Verteilung elektrischer Potentiale,
- Figur 13: eine perspektivische Ansicht eines Sensors gemäß einer zweiten Ausführungsform der vorliegenden Erfindung,
- Figur 14: eine perspektivische Ansicht des Messkanaldeckels der zweiten Ausführungsform,
- Figur 15: eine Draufsicht auf einen Elektronikraumdeckel der zweiten Ausführungsform,
- Figur 16: eine Unteransicht des Elektronikraumdeckels der zweiten Ausführungsform,
- Figur 17: einen Querschnittsansicht eines Sensors gemäß einer dritten Ausführungsform,
- Figur 18: einen vergrößerten Ausschnitt des Sensors der dritten Ausführungsform,
- Figur 19: einen Ausschnitt eines Sensors gemäß einer vierten Ausführungsform
- Figur 20: einen Ausschnitt eines Sensors gemäß einer fünften Ausführungsform
- Figur 21: einen Ausschnitt eines Sensors gemäß einer sechsten Ausführungsform
- Figur 22: einen Ausschnitt eines Sensors gemäß einer siebten Ausführungsform,
- Figur 23: einen vergrößerten Ausschnitt des Sensors der siebten Ausführungsform
- Figur 24: eine Querschnittsansicht des Sensors und
- Figur 25: eine Längsschnittansicht des Sensors.

Ausführliche Beschreibung der Ausführungsformen der Erfindung

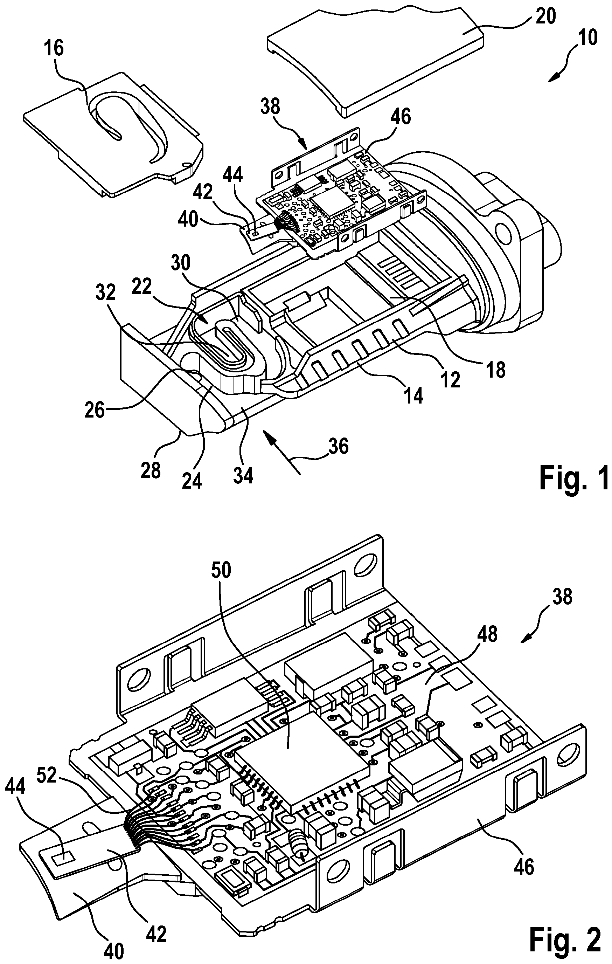

Figur 1 zeigt eine perspektivische Ansicht einer Sensoranordnung 10 zur Bestimmung eines Parameters eines fluiden Mediums. Die Sensoranordnung 10 ist als Heißfilmluftmassenmesser ausgestaltet und umfasst ein als Steckfühler ausgebildetes Sensorgehäuse 12, welches beispielsweise in ein Strömungsrohr, insbesondere einen Ansaugtrakt einer Brennkraftmaschine, eingesteckt werden kann. Das Sensorgehäuse 12 weist einen Gehäusekörper 14, einen Messkanaldeckel 16, einen Elektronikraum 18 sowie einen Elektronikraumdeckel 20 zum Verschließen des Elektronikraums 18 auf. In dem Gehäusekörper 16 ist eine Kanalstruktur 22 ausgebildet. Die Kanalstruktur 22 weist einen Hauptkanal 24, welcher in einem Hauptstromauslass 26 auf der Unterseite 30 bezogen auf die Darstellung in Figur 1 des Sensorgehäuses 12 mündet, sowie einen von dem Hauptkanal 24 abzweigenden Bypass- bzw. Messkanal 30, welcher in einen ebenfalls auf der Unterseite 30 des Sensorgehäuses 12 angeordneten Bypass- oder Messkanalauslass 32 mündet, auf. Durch die Kanalstruktur 22 kann über eine Einlassöffnung 34, die im eingesetzten Zustand einer Hauptströmungsrichtung 36 des fluiden Mediums am Ort des Sensorgehäuses 12 entgegenweist, eine repräsentative Menge des fluiden Mediums strömen.

Figur 2 zeigt eine vergrößerte Darstellung eines Elektronikmoduls 38 der Sensoranordnung 10. In einem eingesetzten Zustand des Elektronikmoduls 38 ragt ein Sensorträger 40 in den Messkanal 30. In diesen Sensorträger 40 ist ein Sensorchip 42 derart eingelassen, dass eine als Sensorbereich des Sensorchips 42 ausgebildete mikromechanische Sensormembran 44 von dem fluiden Medium überströmbar ist. Der Sensorträger 40 ist mit dem Sensorchip 42 Bestandteil des Elektronikmoduls 38. Das Elektronikmodul 38 weist weiter ein gebogenes Bodenblech 46 sowie eine darauf angebrachte, beispielsweise aufgeklebte Leiterplatte 48 mit einer Ansteuer- und Auswerteschaltung 50 auf. Der Sensorchip 42 ist mit der Ansteuer- und Auswerteschaltung 50 über elektrische Verbindungen 52, welche hier als Drahtbonding ausgestaltet sind, elektrisch verbunden. Das derart entstandene Elektronikmodul 38 wird in den Elektronikraum 18 in dem Gehäusekörper 14 des Sensorgehäuses 12 eingebracht, wie beispielsweise eingeklebt. Dabei ragt der Sensorträger 40 in die Kanalstruktur 22 hinein. Anschließend wird der Elektronikraum 18 von dem Elektronikraumdeckel 20 verschlossen.

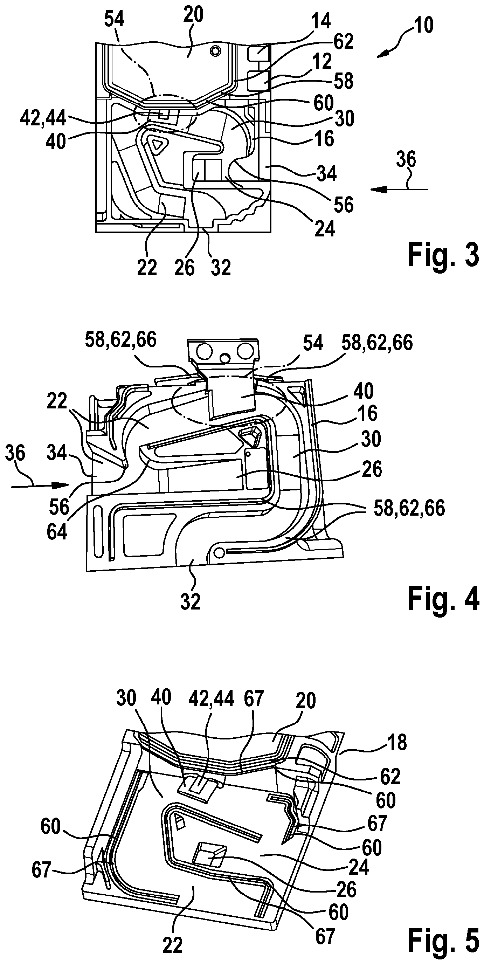

Figur 3 zeigt eine Draufsicht auf eine weitere mögliche Ausführungsform des Sensors 10. Dabei ist die Kanalstruktur 22 in dem Messkanaldeckel 16 ausgebildet. Der Messkanalauslass 32 ist in einer Stirnseite des Messkanaldeckels 16 ausgebildet. Der Messkanaldeckel 16, der Gehäusekörper 14, der Elektronikraumdeckel 20 und der Sensorträger 40 sind miteinander verklebt. Durch den Messkanaldeckel 16, den Gehäusekörper 14 und den Elektronikraumdeckel 20 wird ein Nahbereich 54 des Sensorchips 42 definiert. Insbesondere im Bereich des Sensorträgers 40 muss ein toleranzarmer Setz- und Klebeprozess mit Abdichtung des Messkanals 30 gewährleistet werden. Anderenfalls würden Partikel oder Tröpfchen unter Umgehung einer Fliehkraftumlenkung 56 auch aus der das Sensorgehäuse 12 umgebenden Umströmung durch undichte Klebungen in den unter niedrigem statischen Druck stehenden Messkanal 30 im Bereich des Sensorträgers 40 und damit zu dem Sensorchip 42 gelangen. Solch eine Kontamination kann zu Kennliniendriften führen. Außerdem können Leckagen - Strömungspfade von außen nach innen -, auch ohne zusätzliche Kontamination zu Änderungen der Druck- und Geschwindigkeitsfelder im Bereich des Sensorchip 42 und damit u.a. zu Kennlinien-Driften führen. Aus diesem Grund ist ein Nut-Feder-System 58 zur Verklebung der Bauteile Messkanaldeckel 16, Gehäusekörper 14 und Elektronikraumdeckel 20 vorgesehen, wie nachstehend ausführlicher beschrieben ist. Das Nut-Feder-System 58 umfasst eine Klebenut 60 und an dem Gehäusekörper 14 und mindestens eine Feder 62 bzw. schmale, umlaufende Seitenwand an dem Elektronikraumdeckel 20, die in die Klebenut 60 eingreift. Die Bauteilreihenfolge des Setz- und Klebeprozesses ist wie folgt: Nach dem Einsetzen des Elektronikmoduls 38 in den Gehäusekörper 14 bzw. den Elektronikraum 18 wird mit dem Setzen des Messkanaldeckels 16 die Klebenut 60 für die Feder 62 bzw. schmale, umlaufende Seitenwand des Elektronikraumdeckels 20 gebildet. Der Elektronikraumdeckel 20 wird also zuletzt auf den Gehäusekörper 14 und den Messkanaldeckel 16 gesetzt.

Figur 4 zeigt Draufsicht auf den Messkanaldeckel 16. Bei der in Figur 4 dargestellten Geometrie gelangt der Großteil des in das Sensorgehäuse 12 eintretenden Massenstroms von der Einlassöffnung 34 über den Hauptstromauslass aus dem Sensorgehäuse 12 heraus. Ein kleiner Teil des Massenstroms gelangt über den Bereich der Fliehkraftumlenkung 56 und einer Gegenkontur 63 mit Abrisskante 64 zu dem Sensorträger 40 mit dem Sensorchip 42. Schließlich tritt der Massenstrom aus dem Messkanal 30 über den Messkanalauslass 32 aus dem Sensorgehäuse 12 heraus. Des Weiteren sind in Figur 4 mehrere Federn 62 erkennbar, die auch als Klebeschwerter 66 ausgebildet sein können bzw. auch als solche bezeichnet werden können. Die Federn 62 bzw. Klebeschwerter 66 des Nut-Feder-Systems 58 dienen zur Verklebung des Gehäusekörpers 14, des Messkanaldeckels 16 und des Elektronikraumdeckels 20und erstrecken sich entlang der Kanalstruktur 22. Im Bereich des Sensorträgers 40 existiert somit sowohl ein Nut-Feder-System 58 zur Verklebung von Messkanaldeckel 16 und Gehäusekörper 14 als auch rückseitig ein Nut-Feder-System 58 zur Verklebung von Elektronikraumdeckel 20 und Messkanaldeckel 16 (Figur 3).

Figur 5 zeigt vergrößerte Ansicht des Gehäusekörpers 14 im Bereich des Messkanaldeckels 16 mit montiertem Elektronikraumdeckel 20 sowie Sensorträger 40 mit mikromechanischem Sensorchip 42. Zu erkennen sind die Klebenuten 16 im Gehäusekörper 14 und Klebstoff 67 an dem Klebeschwert 66 des Elektronikraumdeckels 20. Zu erkennen ist insbesondere die Verfüllung der Klebenuten 60 mit Klebstoff 67, die sich entlang der Ränder der Kanalstruktur 22 und des Elektronikraumdeckels 20 erstrecken.

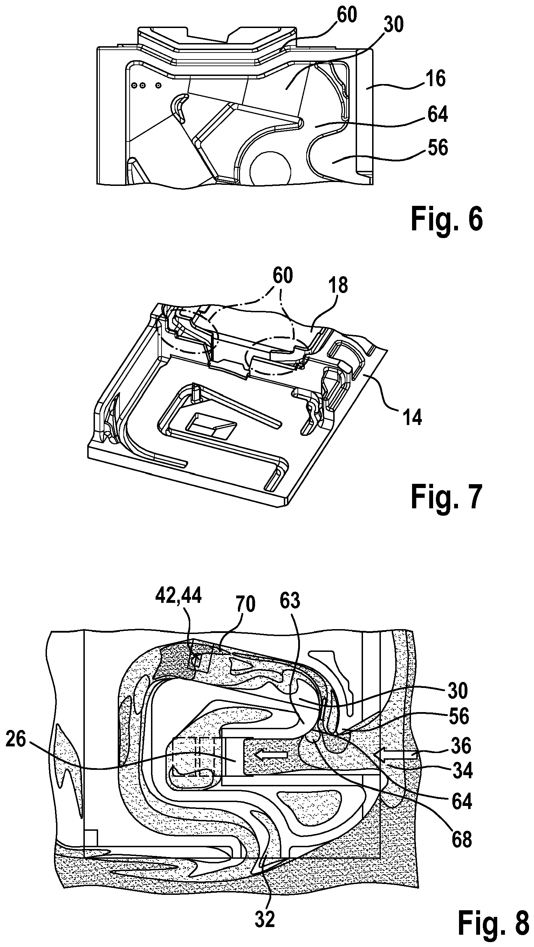

Figur 6 zeigt eine vergrößerte Ansicht einer Rückseite des Messkanaldeckels 16. Zu erkennen ist die Klebenut 60 in dem Messkanaldeckel 16. In diesem Bereich müssen für bestimmte erfindungsgemäße Varianten, die nachstehend ausführlicher beschrieben werden, Änderungen vorgenommen werden, damit die nachfolgend besprochenen Vorteile bzw. Verbesserungseffekte realisiert werden.

Figur 7 zeigt eine vergrößerte perspektivische Ansicht des Gehäusekörpers 14 in einem unverschlossenen Zustand, d.h. ohne Messkanaldeckel 16. Entsprechend ist weder der Messkanaldeckel 16, in dem die Kanalstruktur 22 ausgebildet ist, noch das Elektronikmodul 38 in dem Elektronikraum 18 vorgesehen. Zu erkennen sind die Klebenuten 60 in dem Gehäusekörper 14, die zur Befestigung des Elektronikraumdeckels 20 dienen und sich an einem Wandbereich mit einer Öffnung befinden, durch die im montierten Zustand der Sensorträger aus dem Elektronikraum 18 heraus und in den Messkanal 30 hinein ragt.

Figur 8 zeigt Darstellung von möglichen Strömungsbedingungen in der Kanalstruktur 22 des Messkanaldeckels 16. Gut zu erkennen ist die Aufteilung des Gesamtmassenstroms an der Einlassöffnung 34 in den Massenstrom durch den Hauptkanal 24 und den Massenstrom durch den Messkanal 30. Charakterisierend für die Verzweigung ist ein Staupunkt 68 auf der Gegenkontur 63 mit Abrisskante 64 gegenüber der Fliehkraftumlenkung 56. Staubpartikel können mit dem Massenstrom durch den Messkanal 30 zur mikromechanischen Sensormembran 44 gelangen. In dem Nahbereich 54 des Sensorträgers 40 ergibt sich ein strahlförmiger Bereich 70 hoher Geschwindigkeit. Leichte Partikel können allerdings über Rezirkulationsgebiete die gesamte Breite des Sensorträgers 40 bzw. des Messkanals 30 erreichen. Eine Kontamination der mikromechanischen Sensormembran 44 ist daher möglich.

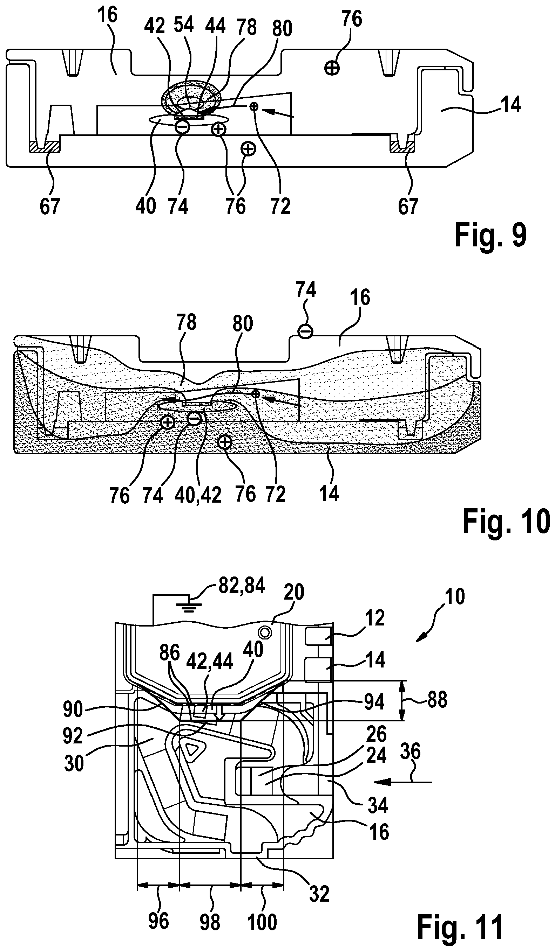

Figur 9 zeigt eine Verteilung elektrischer Potentiale bei dem Sensor 10. Der Schnitt verläuft dabei durch den Messkanal 30 im Bereich des Sensorträgers 40. Als mögliche Randbedingungen wurden ein Potential von 0 Volt auf der Chipoberfläche sowie 100 Volt an sonstigen Bauteilen gesetzt. In dem Nahbereich 54 der mikromechanischen Sensormembran 44 ist die Ausbildung elektrischer Felder insbesondere bedeutsam für die Anlagerung von Partikeln auf der mikromechanischen Sensormembran 44 und dem Sensorchip 42. Diese Potentiale können für die weiteren Ausführungen qualitativ als negative bzw. positive Potentiale formuliert werden. Eine elektrostatische Aufladung und Erreichung solcher Potentiale kann sich beispielsweise durch Reibung oder geladene Teilchen direkt an den dargestellten Bauteilen oder indirekt über die Feldwirkung umgebender Bauteile, wie beispielsweise Strömungsrohr, Luftfilterwände und dergleichen einstellen.

Geladene Teilchen werden in elektrischen Feldern von gegensätzlichen Ladungen bzw. Potentialen angezogen und von gleichen Ladungen bzw. Potentialen abgestoßen. Ohne Anfangsgeschwindigkeit in einem elektrischen Feld freigesetzte Partikel bewegen sich dabei auf dem Pfad der stärksten Gradienten. Wie in Figur 9 dargestellt, würde sich ein positiv geladenes Teilchen 72 also im Strömungsraum unter Berücksichtigung der zusätzlich vorhandenen Trägheitskräfte in der Nähe des Sensorträgers 40 entlang des stärksten Gradienten des elektrischen Feldes zu einem negativen Potential 74 und somit zu dem Sensorchip 42 und der mikromechanischen Sensormembran 44 bewegen. Staubpartikel können sich auf diese Weise insbesondere auf dem Sensorchip 42 und der mikromechanischen Sensormembran 44 absetzen und unter anderem zu einer Kennliniendrift führen. Des Weiteren ist zu erkennen, dass der übrige Bereich des Gehäusekörpers 14 und des Messkanaldeckels 16 ein positives Potential 76 aufweist. Daher ergibt sich in der Nähe des Sensorträgers 40 bzw. des Sensorchips 42 ein elektrisches Feld 78.

Figur 10 zeigt eine Verteilung elektrischer Potentiale bei einem elektrisch leitfähigen Messkanaldeckel 16. Zu erkennen sind das positive Potential 76 des Gehäusekörpers 14 sowie das negative Potential 74 im Bereich des Sensorchips 42. Der Messkanaldeckel 16 könnte entsprechend elektrisch auf ein negatives Potential 74, wie beispielsweise das Massepotential des Sensors 10, gesetzt werden. Wie aus der Darstellung der Figur 10 zu erkennen ist, sind die Gradienten des elektrischen Feldes 78 deutlich schwächer ausgeprägt als bei der Darstellung der Figur 9. Die eingezeichnete beispielhafte Flugbahn 80 des positiv geladenen Teilchens 72 sollte eine geringere Kontamination ergeben. Allerdings ist die elektromagnetische Verträglichkeit gegenüber den elektronischen Bauteilen des Sensors 10 bei einem elektrisch leitfähigen Messkanaldeckel 16 nicht in jedem Fall gegeben.

Figur 11 zeigt eine perspektivische Ansicht eines Sensors 10 gemäß einer ersten Ausführungsform der vorliegenden Erfindung, der die oben genannten Nachteile überwindet. So weist der Elektronikraumdeckel 20 elektrisch leitfähige Eigenschaften auf. Beispielsweise ist der Elektronikraumdeckel 20 aus einem elektrisch leitfähigen Material hergestellt. Beispielsweise ist der Elektronikraumdeckel 20 aus Metall hergestellt. Alternativ sind verschiedene Materialien für den Elektronikraumdeckel 20 denkbar. Beispielsweise kann der Elektronikraumdeckel 20 aus Einkomponenten- oder Zweikomponentenmaterialien hergestellt sein. Dadurch lässt sich der Elektronikraumdeckel 20 mittels eines Spritzgussverfahrens herstellen. Das Spritzgussverfahren kann dabei so ausgelegt werden, dass in unterschiedlichen Bereichen des Elektronikraumdeckels 20 unterschiedliche Materialien bzw. Komponenten, also beispielsweise leitfähige und nicht leitfähige Komponenten, vorhanden sein können. Insbesondere können Faser-Matrix-, Kugel-Matrix-Verbunde oder andere Faserverbundstoffe im Einkomponenten- oder Zweikomponentenverfahren gespritzt werden. Die Leitfähigkeit des Elektronikraumdeckels 20 lässt sich in ausreichender Form beispielsweise mittels eines Kunststoffspritzgussverfahrens realisieren, bei dem 15 % Kohlenstofffaseranteile verwendet werden.

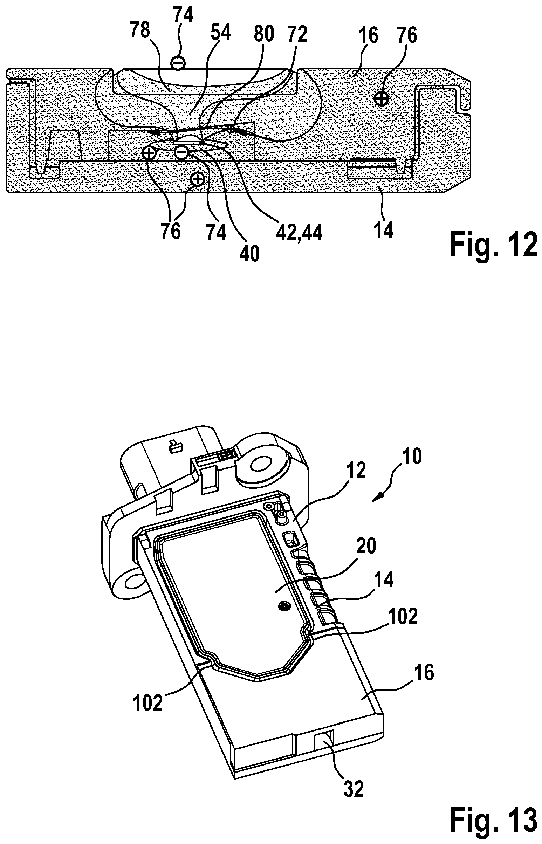

Figur 12 zeigt die Verteilung elektrischer Potentiale bei dem erfindungsgemäßen Sensor 10. Zu erkennen ist ein positiv geladenes Teilchen 72 mit seiner Flugbahn 80. Bei der gezeigten Ausführungsform ist der Elektronikraumdeckel 20 mit einem festen Potential 82 elektrisch verbunden (Figur 11). Bevorzugt ist das feste Potential 82 die Sensormasse 84. Der Elektronikraumdeckel 20 weist ein negatives Potential 74 auf und ist somit negativ geladen. Im Nahbereich 54 des Sensorchips 42 und der mikromechanischen Sensormembran 44 ergeben sich dadurch deutlich schwächere Gradienten des elektrischen Feldes 78. Ein beispielsweise positiv geladenes Staubteilchen 72 wird im Nahbereich 54 des Sensorchips 42 weit weniger stark angezogen. Damit kann es sich nicht auf dem Sensorchip 42 oder der mikromechanischen Sensormembran 44 absetzen. Hier nicht näher dargestellte negativ geladene Teilchen werden einerseits vom positiv geladenen Gehäusekörper 14 angezogen und sind damit harmlos bezüglich kontaminationsinduzierter Kennliniendriften. Andererseits besteht die Möglichkeit, dass sich negativ geladene Teilchen auf einem positiv geladenen Sensorträger 40 absetzen. Kennlinienrelevant wird die Kontamination des Sensorträgers 40 allerdings erst, wenn sich beträchtliche Partikelschichtdicken, vor allem stromauf des Sensorchips 42 und der mikromechanischen Sensormembran 44, bilden und diese die Strömungs- und Temperaturgrenzschicht im Nahbereich 54 der mikromechanischen Sensormembran 44 deutlich verändern. Die relativ dünne Grenzschicht und die hohen Strömungsgeschwindigkeiten am Sensorträger 40 wirken der Bildung einer solch dicken Partikelschicht allerdings entgegen.

Unter Rückkehr zur Figur 11 wird eine mögliche Modifikation des erfindungsgemäßen Sensors 10 beschrieben. Des Weiteren ist aus Figur 11 eine Kante 86 des Elektronikraumdeckels 20 zu erkennen. Die Kante 86 ist dem Messkanaldeckel 16 zugewandt. Die Kante 86 kann bis ungefähr zur Mitte des Sensorchips 42 reichen. Möglich ist jedoch eine Ausführungsform, bei der die Kante 86 weiter in Richtung der Kanalstruktur 22 vorgezogen wird, so dass der Elektronikraumdeckel 20 in einem verschlossenen Zustand den Sensorchip 42 vollständig überdeckt. Das Vorziehen der Kante 86 in Form einer Abmessung 88 ist in Figur 11 eingezeichnet. Weitere mögliche Modifikationen betreffen mehrere Abschnitte 90, 92, 94 der Kante 86 mit zugehörigen Abmessungen 96, 98, 100. Mit anderen Worten kann jeweils die Breite der Abschnitte 90, 92, 94 der Kante 86 in Abhängigkeit von der jeweiligen Anwendung bzw. Lage des Sensorträgers 40 bzw. Sensorchips 42 verändert werden, um eine Abdeckung des Sensorchips 42 durch den Elektronikraumdeckel 20 zu realisieren.

Figur 13 zeigt eine perspektivische Ansicht eines Sensors 10 gemäß einer zweiten Ausführungsform der vorliegenden Erfindung. Nachstehend werden lediglich die Unterschiede zu der ersten Ausführungsform beschrieben und gleiche Bauteile sind mit gleichen Bezugszeichen versehen. Bei dem Sensor 10 der zweiten Ausführungsform weist der Elektronikraumdeckel 20 angrenzend an die Kante 86 jeweils einen zusätzlichen geraden Wandabschnitt 102 auf. Die Wandabschnitte 102 können sich parallel zu einer Längserstreckungsrichtung des Sensorgehäuses 12 erstrecken.

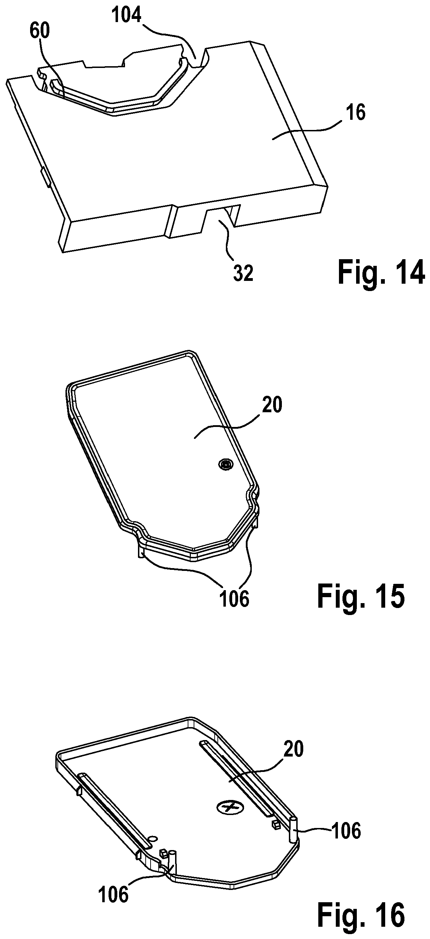

Figur 14 zeigt eine perspektivische Ansicht des Messkanaldeckels 16 der zweiten Ausführungsform. Zu erkennen ist ein im Vergleich zu dem herkömmlichen Sensor unterschiedlicher Verlauf der Klebenut 60, der dem Verlauf der Kante 86 angepasst ist. Die Kante 86 weist das Klebeschwert 66 auf. Des Weiteren weist der Messkanaldeckel 16 eine Messkanaldeckelbohrung 104 auf. Nicht näher dargestellt ist, dass der Gehäusekörper 14 eine Gehäusekörperbohrung aufweist.

Figur 15 zeigt eine Draufsicht auf den Elektronikraumdeckel 20 der zweiten Ausführungsform. Der Elektronikraumdeckel 20 weist mindestens einen Zapfen 106 auf. Der Zapfen 106 ist beispielsweise an den Elektronikraumdeckel 20 angelötet oder, bei einer Ausbildung aus Kunststoff, angespritzt. In einem verschossenen Zustand greift der Zapfen 106 in die Messkanaldeckelbohrung 104 und die Gehäusekörperbohrung.

Figur 16 zeigt eine Unteransicht des Elektronikraumdeckels 20 der zweiten Ausführungsform. Zu erkennen ist, dass auch mehr als ein Zapfen 106 vorgesehen sein kann. Beispielsweise sind zwei Zapfen 106 vorgesehen, die von dem Elektronikraumdeckel 20 senkrecht vorstehen und in einem verschlossenen Zustand jeweils in eine Messkanaldeckelbohrung 104 und Gehäusekörperbohrung greifen. Bei einer bevorzugten Ausführungsform ist der Elektronikraumdeckel 20 mittels des Zapfens 106 mit dem festen elektrischen Potential 82 elektrisch verbunden.

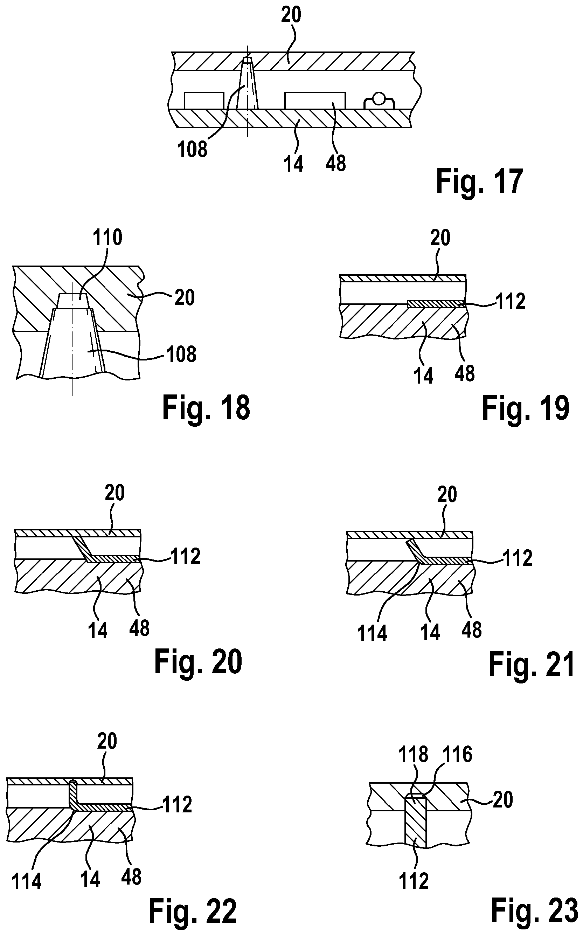

Figur 17 zeigt eine Querschnittsansicht eines Sensors 10 gemäß einer dritten Ausführungsform der vorliegenden Erfindung. Nachstehend werden lediglich die Unterschiede zu den vorhergehenden Ausführungsformen beschrieben und gleiche Bauteile sind mit gleichen Bezugszeichen versehen. Die dritte Ausführungsform stellt einen annähernd inversen Aufbau zu der zweiten Ausführungsform dar. So weist die Leiterplatte 48 einen Stift 108 auf. Der Stift 108 kann mit der Leiterplatte 48 fest verbunden sein. Beispielsweise ist der Stift 108 auf die Leiterplatte 48 gelötet. Diese Ausbildung erlaubt die Verwendung herkömmlicher Leiterplatten, die entsprechend durch das Vorsehen des Stifts 108 modifiziert werden. Der Elektronikraumdeckel 20 der dritten Ausführungsform weist eine konische Gegenkontur 110 auf.

Figur 18 zeigt einen vergrößerten Ausschnitt des Sensors 10 der dritten Ausführungsform. Zu erkennen sind der Stift 108 und der Elektronikraumdeckel 20 mit der konischen Gegenkontur 110. In einem verschlossenen Zustand greift der Stift 108 in die konische Gegenkontur 110, so dass der Elektronikraumdeckel 20 mittels des Stifts 108 mit dem festen elektrischen Potential 82 elektrisch verbunden ist.

Figur 19 zeigt einen Ausschnitt eines Sensors 10 gemäß einer vierten Ausführungsform der vorliegenden Erfindung. Nachstehend werden lediglich die Unterschiede zu den vorhergehenden Ausführungsformen beschrieben und gleiche Bauteile sind mit gleichen Bezugszeichen versehen. Bei der vierten Ausführungsform weist die Leiterplatte 48 einen Pin 112 auf. Der Pin 112 kann beispielsweise ein zusätzlicher Leiterkamm-Pin sein. Der Pin 112 kann in den Gehäusekörper 14 eingespritzt sein und sich parallel zu der Leiterplatte 48 erstrecken. Mittels des Pins 112 ist der Elektronikraumdeckel 20 mit dem festen elektrischen Potential 82 elektrisch verbunden.

Figur 20 zeigt einen Ausschnitt eines Sensors 10 gemäß einer fünften Ausführungsform der vorliegenden Erfindung. Nachstehend werden lediglich die Unterschiede zu den vorhergehenden Ausführungsformen beschrieben und gleiche Bauteile sind mit gleichen Bezugszeichen versehen. Der Sensor 10 der fünften Ausführungsform basiert auf dem Sensor 10 der vierten Ausführungsform. Bei dem Sensor 10 der fünften Ausführungsform ist der Pin 112 nicht parallel zu der Leiterplatte 48 angeordnet, sondern in Richtung zu dem Elektronikraumdeckel 20 hin und von dem Gehäusekörper 14 weg gebogen.

Figur 21 zeigt einen Ausschnitt eines Sensors 10 gemäß einer sechsten Ausführungsform der vorliegenden Erfindung. Nachstehend werden lediglich die Unterschiede zu den vorhergehenden Ausführungsformen beschrieben und gleiche Bauteile sind mit gleichen Bezugszeichen versehen. Der Sensor 10 der sechsten Ausführungsform basiert auf dem Sensor 10 der fünften Ausführungsform. Dabei ist der Pin 112 mit einem Radius 114 in Richtung zu dem Elektronikraumdeckel 20 gebogen. Weiterhin ist der Pin 112 abgekantet und bildet mit dem Elektronikraumdeckel 20 eine Kontaktierung unter Vorspannung.

Figur 22 zeigt einen Ausschnitt eines Sensors 10 gemäß einer siebten Ausführungsform der vorliegenden Erfindung. Nachstehend werden lediglich die Unterschiede zu den vorhergehenden Ausführungsformen beschrieben und gleiche Bauteile sind mit gleichen Bezugszeichen versehen. Der Sensor 10 der siebten Ausführungsform basiert auf dem Sensor 10 der sechsten Ausführungsform. Der Pin 112 ist in einem Winkel von im Wesentlichen 90°, d.h. mit einer Abweichung von nicht mehr als 10 ° von einem idealen rechten Winkel, in Richtung zu dem Elektronikraumdeckel 20 gebogen.

Figur 23 zeigt einen vergrößerten Ausschnitt des Sensors 10 der siebten Ausführungsform, wie er in Figur 22 dargestellt ist. Der Elektronikraumdeckel 20 weist eine konische Vertiefung 116 auf. Der Pin 112 greift in die Vertiefung 116 ein und ist derart mit Elektronikraumdeckel 20 verbunden, dass eine Verstemmung 118 mit dem Elektronikraumdeckel 20 gebildet ist.

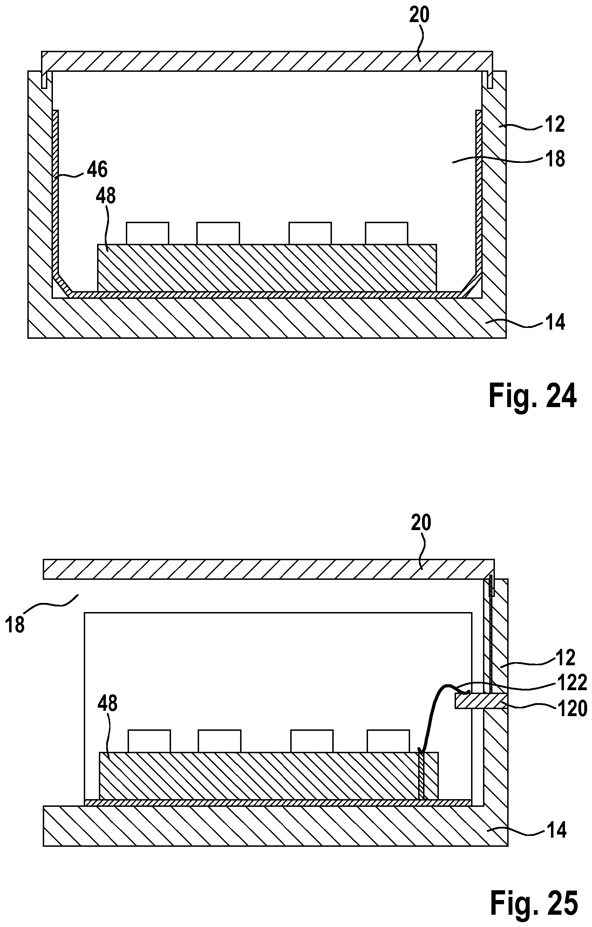

Figur 24 zeigt eine Querschnittsansicht eines Sensors 10 gemäß einer der zuvor beschriebenen Ausführungsformen. Der Schnitt verläuft durch den Elektronikraum 18. Zu erkennen ist die Leiterplatte 48 mit der Ansteuer- und/oder Auswerteschaltung 50. Auch ist zu erkennen, wie sich das Bodenblech 46 an den Gehäusekörper 14 anschmiegt. Der Elektronikraum 18 ist von dem Elektronikraumdeckel 20 verschlossen. Dadurch wird ein abgeschirmter Elektronikraum 18 realisiert.

Figur 25 zeigt eine Längsschnittansicht eines Sensors 10 gemäß einer der zuvor beschriebenen Ausführungsformen. Der Schnitt verläuft dabei durch den Elektronikraum 18. Zu erkennen ist die Leiterplatte 48 in dem Elektronikraum 18 und die elektrische Kontaktierung der Leiterplatte 48 mit einem Stecker 120 des Sensorgehäuses 12 mittels Bonddrähten 122. Der Gehäusekörper 14, das Bodenblech 46, der Elektronikraumdeckel 20, die Leiterplatte 48 mit ihren elektronischen Bauteilen, der Stecker 120 und die Kontaktierung des Elektronikraumdeckels 20 bilden einen bezüglich elektromagnetischer Verträglichkeit und elektrostatischer Entladungen günstigen Schirmraum.

## Patentansprüche

1. Sensor (10) zur Bestimmung wenigstens eines Parameters eines durch einen Messkanal (30) strömenden fluiden Mediums, insbesondere eines Ansaugluftmassenstroms einer Brennkraftmaschine, wobei der Sensor (10) ein Sensorgehäuse (12), insbesondere einen in ein Strömungsrohr eingebrachten oder einbringbaren Steckfühler, in dem der Messkanal (30) ausgebildet ist, und mindestens einen in dem Messkanal (30) angeordneten Sensorchip (42) zur Bestimmung des Parameters des fluiden Mediums aufweist, wobei das Sensorgehäuse (12) einen Elektronikraum (18) zur Aufnahme eines Elektronikmoduls (38), einen Elektronikraumdeckel (20) zum Verschließen des Elektronikraums (18) und einen Messkanaldeckel (16) aufweist,
wobei der Elektronikraumdeckel (20) zumindest teilweise elektrisch leitfähige Eigenschaften aufweist und mit einem festen Potential (82) elektrisch verbunden ist, **dadurch gekennzeichnet, dass** der Elektronikraumdeckel (20) in einem verschlossenen Zustand teilweise auf dem Messkanaldeckel (16) angebracht ist und der Elektronikraumdeckel (20) so ausgebildet ist, dass der Elektronikraumdeckel (20) in einem verschlossenen Zustand den Sensorchip (42) überdeckt.

2. Sensor (10) nach dem vorhergehenden Anspruch, wobei der Elektronikraumdeckel (20) zumindest teilweise aus mindestens einem elektrisch leitfähigen Material hergestellt ist.

3. Sensor (10) nach dem vorhergehenden Anspruch, wobei das feste Potential (82) die Sensormasse (84) ist.

4. Sensor (10) nach Anspruch 1, wobei das Sensorgehäuse (12) einen Gehäusekörper (14) aufweist, wobei der Gehäusekörper (14) mindestens eine Gehäusekörperbohrung aufweist, wobei der Messkanaldeckel (16) mindestens eine Messkanaldeckelbohrung (104) aufweist, wobei der Elektronikraumdeckel (20) mindestens einen Zapfen (106) aufweist, wobei in einem verschlossenen Zustand der Zapfen (106) in die Messkanaldeckelbohrung (104) und die Gehäusekörperbohrung greift.

5. Sensor (10) nach dem vorhergehenden Anspruch, wobei der Elektronikraumdeckel (20) mittels des Zapfens (106) mit dem festen elektrischen Potential (82) elektrisch verbunden ist.

6. Sensor (10) nach einem der Ansprüche 1 oder 3, wobei das Elektronikmodul (38) eine Leiterplatte (48) aufweist, wobei die Leiterplatte (48) mindestens einen Stift (108) aufweist, wobei der Elektronikraumdeckel (20) mittels des Stifts (108) mit dem festen elektrischen Potential (82) elektrisch verbunden ist.

7. Sensor (10) nach einem der Ansprüche 1 oder 3, wobei das Elektronikmodul (38) eine Leiterplatte (48) aufweist, wobei die Leiterplatte (48) mindestens einen Pin (112) aufweist, wobei der Elektronikraumdeckel (20) mittels des Pins (112) mit dem festen elektrischen Potential (82) elektrisch verbunden ist.

## Claims

1. Sensor (10) for determining at least one parameter of a fluid medium flowing through a measurement channel (30), in particular of an intake air mass flow of an internal combustion engine, wherein the sensor (10) has a sensor housing (12), in particular a plug-in probe which is introduced or can be introduced into a flow tube and in which the measurement channel (30) is formed, and at least one sensor chip (42) which is arranged in the measurement channel (30) and is intended to determine the parameter of the fluid medium, wherein the sensor housing (12) has an electronics compartment (18) for accommodating an electronic module (38), an electronics compartment cover (20) for closing the electronics compartment (18) and a measurement channel cover (16),
wherein the electronics compartment cover (20) has at least partially electrically conductive properties and is electrically connected to a fixed potential (82), **characterized in that** the electronics compartment cover (20) is partially fitted to the measurement channel cover (16) in a closed state, and the electronics compartment cover (20) is designed in such a manner that the electronics compartment cover (20) covers the sensor chip (42) in a closed state.

2. Sensor (10) according to the preceding claim, wherein the electronics compartment cover (20) is at least partially produced from at least one electrically conductive material.

3. Sensor (10) according to the preceding claim, wherein the fixed potential (82) is the sensor earth (84) .

4. Sensor (10) according to Claim 1, wherein the sensor housing (12) has a housing body (14), wherein the housing body (14) has at least one housing body hole, wherein the measurement channel cover (16) has at least one measurement channel cover hole (104), wherein the electronics compartment cover (20) has at least one stud (106), wherein the stud (106) engages in the measurement channel cover hole (104) and in the housing body hole in a closed state.

5. Sensor (10) according to the preceding claim, wherein the electronics compartment cover (20) is electrically connected to the fixed electrical potential (82) by means of the stud (106).

6. Sensor (10) according to either of Claims 1 and 3, wherein the electronic module (38) has a printed circuit board (48), wherein the printed circuit board (48) has at least one peg (108), wherein the electronics compartment cover (20) is electrically connected to the fixed electrical potential (82) by means of the peg (108).

7. Sensor (10) according to either of Claims 1 and 3, wherein the electronic module (38) has a printed circuit board (48), wherein the printed circuit board (48) has at least one pin (112), wherein the electronics compartment cover (20) is electrically connected to the fixed electrical potential (82) by means of the pin (112).

## Revendications

1. Capteur (10) pour déterminer au moins un paramètre d'un milieu fluide qui s'écoule à travers un canal de mesure (30), notamment un débit massique d'air d'aspiration d'un moteur à combustion interne, le capteur (10) possédant un boîtier de capteur (12), notamment une sonde à enficher introduite ou introductible dans un tube d'écoulement, dans lequel est formé le canal de mesure (30), et au moins une puce de capteur (42) disposée dans le canal de mesure (30) pour déterminer le paramètre du milieu fluide, le boîtier de capteur (12) possédant un espace électronique (18) destiné à accueillir un module électronique (38), un couvercle d'espace électronique (20) destiné à fermer l'espace électronique (18) et un couvercle de canal de mesure (16),
le couvercle d'espace électronique (20) possédant des propriétés de conduction électrique au moins partielle et étant relié électriquement à un potentiel fixe (82), **caractérisé en ce que** le couvercle d'espace électronique (20), dans un état fermé, est placé partiellement sur le couvercle de canal de mesure (16) et le couvercle d'espace électronique (20) est configuré de telle sorte que le couvercle d'espace électronique (20), dans un état fermé, recouvre la puce de capteur (42).

2. Capteur (10) selon la revendication précédente, le couvercle d'espace électronique (20) étant au moins partiellement fabriqué dans au moins un matériau électriquement conducteur.

3. Capteur (10) selon la revendication précédente, le potentiel fixe (82) étant la masse de capteur (84).

4. Capteur (10) selon la revendication 1, le boîtier de capteur (12) possédant un corps de boîtier (14), le corps de boîtier (14) possédant au moins un trou de corps de boîtier, le couvercle de canal de mesure (16) possédant au moins un trou de couvercle de canal de mesure (104), le couvercle d'espace électronique (20) possédant au moins un tenon (106), dans un état fermé, le tenon (106) pénétrant dans le trou de couvercle de canal de mesure (104) et le trou de corps de boîtier.

5. Capteur (10) selon la revendication précédente, le couvercle d'espace électronique (20) étant relié électriquement au potentiel électrique fixe (82) au moyen du tenon (106).

6. Capteur (10) selon l'une des revendications 1 et 3, le module électronique (38) possédant un circuit imprimé (48), le circuit imprimé (48) possédant au moins une broche (108), le couvercle d'espace électronique (20) étant relié électriquement au potentiel électrique fixe (82) au moyen de la broche (108).

7. Capteur (10) selon l'une des revendications 1 et 3, le module électronique (38) possédant un circuit imprimé (48), le circuit imprimé (48) possédant au moins une patte (112), le couvercle d'espace électronique (20) étant relié électriquement au potentiel électrique fixe (82) au moyen de la patte (112).
